# EUROPEAN PATENT APPLICATION

(11) **EP 2 487 621 A1**
(43) Date of publication of application: **15.08.2012**
(21) Application number: 11184443.7
(22) Date of filing: 07.10.2011
(51) Int. Cl.: G06F 21/20, G06F 3/048

(54) **Electronic device and method for unlocking user interface**

(30) Priority: 28.01.2011 TW 100103509
(71) Applicant: Hon Hai Precision Industry Co., Ltd., New Taipei City (TW)
(72) Inventor: Lin Tay-Yang, Tu-Cheng, New Taipei (TW); Chen, Chin-Feng, Tu-Cheng, New Taipei (TW); Liu, Shu-Ming, Tu-Cheng, New Taipei (TW); Shih Chi-Tse, Tu-Cheng, New Taipei (TW); Hou Ni-Chun, Tu-Cheng, New Taipei (TW); Hsu, Hsin-Chih, Tu-Cheng, New Taipei (TW); Du, Cheng-Hsiu, Tu-Cheng, New Taipei (TW)
(74) Representative: Gray, John James

(57) **Abstract**

An electronic device includes a touch-screen display, a processor, a memory, and one or more modules stored in the memory. The one or more modules are adapted to be executed by the processor to detect one or more contact actions on the touch-screen display when the user interface of the electronic device is locked. The one or more modules are adapted to allow and detect the rotation of an unlock image relative to a background image in accordance with the one or more contact actions, wherein the unlock image and the background image are graphical, and the unlock image is an interactive user-interface object. The one or more modules are adapted to determine one or more positions of the unlock image relative to the background image from the one or more contact actions.

## Description

### Field

The disclosed embodiments generally relate to user interfaces, and more particularly, to unlocking user interfaces on portable electronic devices.

### BackGround

One of several well-known unlocking procedures, such as pressing a predefined set of buttons or entering a code or password, may be used to unlock electronic devices with touch-screens and applications running on such devices. These unlocking procedures, however, are not user-friendly and reduce the ease of the unlocking process and the device itself.

Accordingly, there is a need for more efficient, user-friendly procedures for unlocking such devices and accessing user interfaces.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 is a block view of one embodiment of an electronic device.

FIG. 2 is one embodiment of a user interface in a locked state.

FIG. 3 is another embodiment of a user interface in a locked state.

FIG. 4 is a flow chart illustrating one embodiment of a method for unlocking a user interface.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module," as used herein, refers to logic embodied in hardware or firmware, or to a collection of software instructions written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

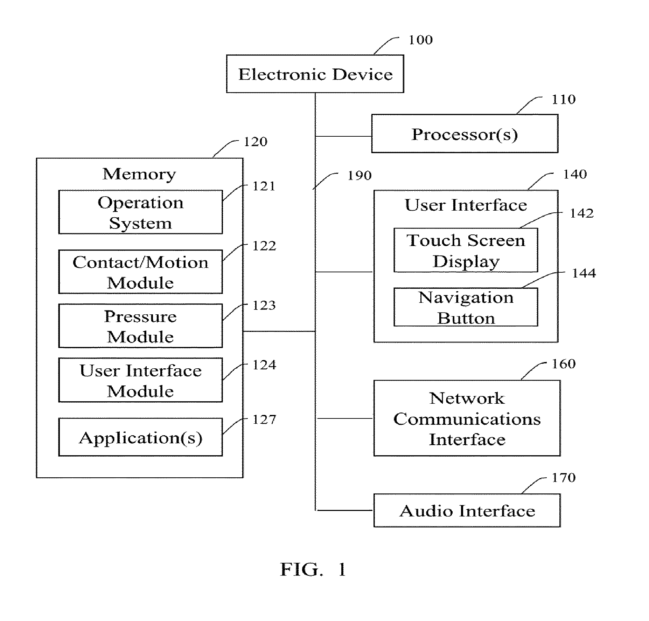

FIG. 1 is a block diagram illustrating one embodiment of a multifunction electronic device 100, such as a portable electronic device or a tablet computer. The electronic device 100 typically includes one or more processors 110, a memory 120, one or more user interfaces 140, one or more network or other communications interfaces 160, one or more audio interfaces 170, and one or more communication buses 190 interconnecting these components.

It should be appreciated that the electronic device 100 is only one example of a multifunction device, and that the electronic device 100 may have more or fewer components than shown, may combine two or more components, or may have a different configuration or arrangement of the components. The various components shown in FIG. 1 may be implemented in hardware, software, or a combination of both hardware and software, including one or more signal processing and/or application-specific integrated circuits.

The memory 120 includes high-speed random access memory, and may include non-volatile memory, such as one or more magnetic disk storage devices, optical disk storage devices, flash memory devices, or other non-volatile solid state storage devices. The memory 120 may optionally include one or more storage devices remotely located from the processors 110. A memory controller may control access to the memory 120 by other components of the electronic device 100, such as the processor 110. The one or more processors 110 may run or execute various software programs and/or sets of instructions stored in the memory 120 to perform various functions for the electronic device 100 and to process data.

The communication buses 190 may include circuitry that interconnects and controls communications between system components.

The user interface 140 may include a touch-screen display 142 and one or more navigation buttons 144. The touch-screen display 142 may be a touch-sensitive display. The user interface 140 may also include other input devices such as a keyboard, mouse, and/or other pointing devices.

The touch-screen display 142 provides an input interface and an output interface between the electronic device 100 and a user. The touch-screen display 142 includes a touch-sensitive surface that accepts input from the user based on physical contact and may display visual output to the user. The visual output may include graphics, text, icons, video, and any combination thereof. In some embodiments, some or all of the visual output may correspond to, or represent, user-interface objects. The touch-screen display 142 detects contact (and any motion or breaking of the contact) on the display 142 and converts the detected contact into an interaction with user-interface objects (e.g., one or more softkeys, icons, web pages or images) that are displayed on the touch-screen display 142. In one embodiment, contact between a touch-screen display 142 and the user may be achieved by the use of a finger of the user.

The touch-screen display 142 may use liquid crystal display (LCD) technology or a light emitting polymer display (LPD) technology, although other display technologies may be used in other embodiments. The touch-screen display 142 may detect contact and any motion, using any of a plurality of touch sensing technologies now known or later to be developed, including but not limited to capacitive, resistive, infrared, surface acoustic wave technologies, and other proximity sensor arrays or elements for determining one or more points of contact with a touch-screen display 142. The user may make contact with the touch-screen display 142 using any suitable object or appendage, such as a stylus or a finger. In some embodiments, the user interface is designed to work primarily with fingertip contact and motions, which are less precise than stylus-based input due to the larger contact surface area of a finger on the touch-screen.

In some embodiments, the electronic device 100 may include a navigation button 144 as an input control device. The user may navigate among and interact with one or more graphical objects displayed on the touch-screen display142 by rotating or clicking the navigation button 144.

The network communication interface 160 may include wireless and wire communication interfaces. The wireless communication interface may use any of a plurality of communications standards, protocols, and technologies, including but not limited to Global System for Mobile Communications (GSM), Enhanced Data GSM Environment (EDGE), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email, instant messaging, and/or Short Message Service (SMS), or any other suitable communication protocol, including communication protocols not yet developed as of the filing date of this document.

The audio interface 170 is provided between a user and the electronic device 100, and may include audio circuitry, a speaker, and a microphone.

In some embodiments, the software components stored in the memory 120 may include an operating system 121, a contact/motion module (or set of instructions) 122, a pressure module (or set of instructions) 123, a user interface control module (or set of instructions) 124, and applications (or set of instructions) 127.

The operating system 121 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, or power management, for example) and facilitates communication between various hardware and software components.

The contact/motion module 122 may detect contact with the touch-screen display 142. The contact/motion module 122 includes various software components for performing various operations as a result of the detection of contact, such as determining if there is motion of the contact and tracking the motion across the touch-screen display 142, and determining if the contact has been broken (i.e., if the contact has ceased). Determining any motion of the point of contact may include determining its speed (magnitude), velocity (magnitude and direction), and/or an acceleration (a change in magnitude and/or direction). These operations may be applied for single contact (e.g., one finger contact) or to multiple simultaneous contacts (e.g., "multi-touch"/multiple finger contact).

The pressure module 123 may detect the amount of pressure exerted on the touch-screen display 142 or other touch sensitive devices. The pressure module 123 includes various software components for performing various operations arising from the detection of pressure on the touch-screen display 142, and determining the strength and duration of the pressure(s) exerted on the touch-screen display 142.

The one or more applications 127 may include any applications installed on the electronic device 100.

The user interface module 124 controls the status of a user interface of the electronic device 100. The user interface module 124 may include a locking module (lock module not shown) and an unlocking module (unlock module not shown). The lock module detects the satisfaction of any or all of one or more of the conditions applicable to locking the user interface of the electronic device 100, and locking the electronic device 100 accordingly. The unlock module detects the satisfaction of any or all of one or more of the conditions applicable to unlocking a user-interface and restoring functionality to the electronic device 100.

When the user-interface is in a locked state, the electronic device 100 is powered on and operational but ignores most user input. That is, the electronic device 100 takes no action in response to most user input and/or the electronic device 100 is prevented from performing a predefined set of operations in response to the user input. The predefined set of operations may include navigation between user interfaces and the activation or deactivation of a predefined set of functions. The locked state may be used to prevent unintentional or unauthorized use of the electronic device 100. In some embodiments, and notwithstanding its locked state, the electronic device 100 may respond to a limited set of user inputs, including an input which attempts to unlock the electronic device 100 or an input which attempts to power off the electronic device 100. Even if the electronic device 100 ignores a user input, the electronic device 100 may still provide sensory feedback (such as visual, audio, or vibration feedback) to the user upon detection of the input, to indicate that the attempted input will be ignored.

In its unlocked state when the user-interface is operating normally, the electronic device 100 is in its normal operating state, and able to detect and respond to user input entered through the user interface. In other embodiments the electronic device 100 in the unlocked state may detect and respond to contact which seeks to navigate between user interfaces to enter data and activate or deactivate functions through the touch-screen display 142.

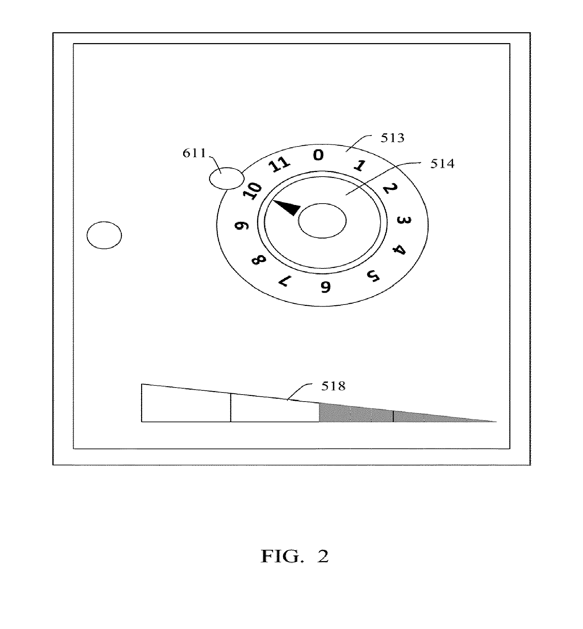

Referring to FIG. 2, the electronic device 100 may be set to the locked state upon satisfaction of any or all of one or more lock conditions. The lock conditions may include events such as the lapsing of a predefined period of time without activity, the entry into an active call, or the application of working power to the device. The lock conditions may also include user intervention, namely the user being able to lock the device by a predefined user input.

The locked state may be changed through an unlock action. The unlock action may include contact with the touch-screen display 142. In some embodiments, the unlock action is a predefined motion(s) performed on the touch-screen display 142 by the object/appendage making contact with the touch-screen display 142.

FIG. 2 illustrates the locked state of a user interface. The locked state may be switched into the unlocked state using an unlock image 514 which is virtually rotatable, according to some embodiments. The unlock image 514 may be surrounded by a background image 513. The background image 513 may be a disk or a surrounding image with numbers or figures or some other indications to indicate the position of the unlock image 514 relative to the background image 513. The unlock image 514 may also have a rotation center and an arrow pointing to the background image 513.

The rotation of the unlock image 514 relative to the background image 513 may be achieved through a contact operation on the unlock image 514. A substantially rotating motion may be required from the point of contact to an end point on the touch-screen display 142 around the rotational center of the unlock image 514, while maintaining continuous contact with the touch-screen display 142, and a breaking of the contact at the end point. The unlock image 514 is rotated synchronously with the rotating motion of the contact.

The unlock action is performed with respect to the unlock image 514, i.e., the unlock action includes interaction with the unlock image 514. In one embodiment, the predefined motion may include the application of pressure (press operation(s)) on the unlock image 514 at one or more predefined positions. For example, if a password "5" is predefined, the unlock action may include detecting a press operation on the unlock image 514 and verifying if the unlock image 514 is pointing to the password "5" as a result of the press operation. When a password "8-3"is predefined, the unlock action includes detecting a first press operation on the unlock image 514 and verifying if a first position of the unlocking image 514 is pointing to the password "8" first. Then detecting a second press operation on the unlock image 514 and verifying the second position of the unlocking image 514 as pointing to the password "3".
In other embodiments, the predefined motion may also include stop or turnaround operations of the unlock image 514 at one or more predefined positions to satisfy the verification. A turnaround operation may include the unlocking image 514 rotated from a clockwise to an anti-clockwise direction. The user may predefine the duration of a stop operation, such as 1 second. This way, the user may complete the unlock action through a "one slide" operation. For example, if a password "8-3-9" is predefined, the unlock action may include at least two events. A first event may include detecting turn around operations of the unlock image 514 in a certain sequence for the password "8-3-9". A second event may include detecting stop operations of the unlock image 514 in a certain sequence for the password "8-3-9."

Referring to FIG. 2, in some embodiments, the rotating operation may be carried out in an abbreviated and alternative manner, for example making contact around the unlock image 514 on the touch-screen display 142 to drag the unlock image 514 to point to the point of contact.

If the contact does not correspond to an attempt to perform the unlock action, or if the contact corresponds to a failed or aborted attempt by the user to perform the unlock action (when unauthorized use is being prevented), then the device remains locked. If the contact corresponds to a successful performance of the unlock action, i.e., the user performs the unlock action successfully, then the device is switched to the unlocked state.

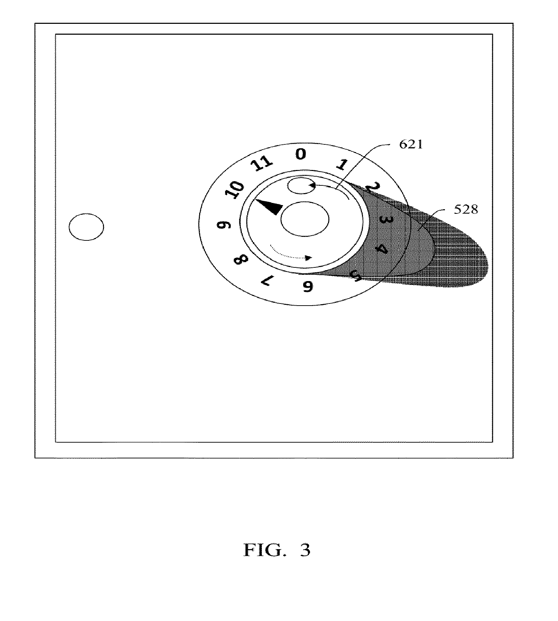

In other embodiments, the unlock action may further include the detection and verification of pressure on the unlock image 514. Referring to FIG. 2 and FIG. 3, a pressure state bar 518 or a pressure state image 528 may be used to indicate a pressure value applied on the unlock image 514. A predefined pressure value may be associated with a predefined position of the unlock image 514 as verification of the unlock operation. The pressure state bar 518 may have many levels, such as 4 levels. Each level may indicate a range of pressure values. A maximum pressure value exerted on the unlock image 514 may be recognized as the significant pressure value of the press operation.

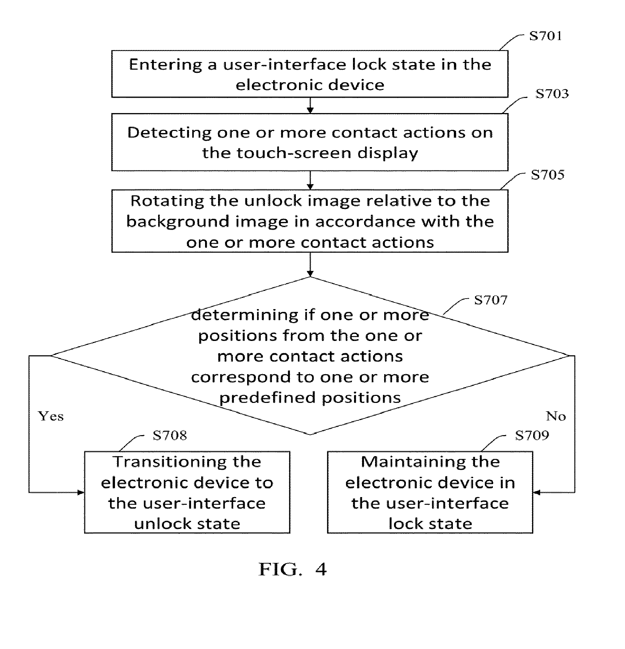

Referring to FIG. 4, in one embodiment, a computer-implemented method for unlocking a user interface may include the following steps. While the process flow described below includes a number of operations that appear to occur in a specific order, it should be apparent that these processes could include more or fewer operations, which can be executed serially or in parallel (e.g., using parallel processors or other multi-threading environment, for example).

In block S701, entering a user-interface locked state in the electronic device 100. The unlock image 514 and the background image 513 are presented on the user-interface.

In block S703, detecting one or more contact actions on the touch-screen display 142.

In block S705, rotating the unlock image 514 relative to the background image 513 in accordance with the one or more contact actions. The unlock image 514 and the background image 513 are graphical, and the unlock image 514 is an interactive user-interface object.

In block S707, determining if the one or more new positions of the unlock image 514 relative to the background image 513 resulting from the one or more contact actions correspond to one or more predefined positions. If the one or more new positions of the unlock image 514 relative to the background image 513 correspond to one or more predefined positions, the method continues to step S708; if the determination is not made, the method continues to step S709.

In block S708, changing the electronic device 100 to the user-interface unlocked state.

In block S709, maintaining the electronic device 100 in the user-interface locked state.

The conditions of the unlock actions from the blocks S707 to S709 may be changed. In other embodiments, block S707 can be determining if the one or more positions of the unlock image 514 relative to the background image 513 and determining if one or more of the pressure values associated with the one or more positions of the unlock image 514 are included in the one or more predefined ranges of pressure values. The one or more positions of the unlock image 514 relative to the background image 513 are from the one or more contact actions corresponding to the one or more predefined positions.

It is to be understood, however, that even though numerous characteristics and advantages have been set forth in the foregoing description of embodiments, together with details of the structures and functions of the embodiments, the disclosure is illustrative only and changes may be made in detail, especially in matters of shape, size, and arrangement of parts within the principles of the disclosure to the full extent indicated by the broad general meaning of the terms in which the appended claims are expressed.

Depending on the embodiment, certain steps or methods described may be removed, others may be added, and the sequence of steps may be altered. It is also to be understood that the description and the claims drawn for or in relation to a method may include some indication in reference to certain steps. However, any indication used is only to be viewed for identification purposes and not as a suggestion as to an order for the steps.

## Claims

1. A computer-implemented method of controlling an electronic device with a touch-screen display, comprising:
detecting one or more contact actions on the touch-screen display when the electronic device is in a user-interface locked state;
rotating an unlock image relative to an background image in accordance with the one or more contact actions, wherein the unlock image and the background image are graphical, and the unlock image is an interactive user-interface object;
determining one or more positions of the unlock image relative to the background image from the one or more contact actions;
changing the electronic device to a user-interface unlocked state upon a condition the one or more positions correspond to one or more predefined positions; and
maintaining the electronic device in the user-interface locked state if the one or more positions do not correspond to the one or more predefined positions.

2. The method of the claim 1 further comprising preventing the electronic device in the user-interface locked state from performing a predefined set of actions in response to detecting any contact with the touch-screen display that does not correspond to the one or more predefined positions.

3. The method of the claim 1, wherein the background image surrounds the unlock image.

4. The method of the claim 1, wherein the one or more contact actions comprises one or more press operations, and the determining the one or more positions of the unlock image further comprises determining the one or more positions of the unlock image relative to the background image through the one or more press operations.

5. The method of the claim 1, wherein the one or more contact actions comprises one slide operation while maintaining continuous contact with the touch-screen display, and the determining the one or more positions of the unlock image relative to the background image from the one or more contact actions further comprises determining the one or more positions of the unlock image relative to the background image through one or more stop operations in the slide operation.

6. The method of the claim 1, wherein the one or more contact actions comprises one slide operation while maintaining continuous contact with the touch-screen display, and the determining the one or more positions of the unlock image relative to the background image from the one or more contact actions further comprises determining the one or more positions of the unlock image relative to the background image through one or more turn around operations in the slide operation.

7. The method of the claim 1, wherein the one or more contact actions comprise a substantially arcuate motion of a point of contact around a rotation center exerted on the unlock image while maintaining continuous contact with the touch-screen display.

8. The method of the claim 1, wherein the one or more contact actions comprise a point of contact exerted outside the unlock image.

9. An electronic device, comprising:
a touch-screen display;
a processor;
a memory; and
one or more modules stored in the memory, wherein the one or more modules are adapted to be executed by the processor to:
detect one or more contact actions on the touch-screen display when the electronic device is in a user-interface locked state;
rotate an unlock image relative to an background image in accordance with the one or more contact actions, wherein the unlock image and the background image are graphical, and the unlock image is an interactive user-interface object;
determine one or more positions of the unlock image relative to the background image from the one or more contact actions;
change the electronic device to a user-interface unlocked state upon a condition the one or more positions correspond to one or more predefined positions; and
maintain the electronic device in the user-interface locked state if the one or more positions do not correspond to the one or more predefined positions.

10. The electronic device of the claim 9, wherein in the user-interface locked state, the electronic device is prevented from performing a predefined set of actions if any contact with the touch-screen display does not correspond to the one or more predefined positions is detected.

11. The electronic device of the claim 9, wherein the background image surrounds the unlock image.

12. The electronic device of the claim 9, wherein the one or more contact actions comprise one or more press operations, the one or more modules are further adapted to determine the one or more positions of the unlock image relative to the background image through the one or more press operations.

13. The electronic device of the claim 9, wherein the one or more contact actions comprises one slide operation while maintaining continuous contact with the touch-screen display, and the one or more modules are further adapted to determine the one or more positions of the unlock image relative to the background image through one or more stop operations in the slide operation.

14. The electronic device of the claim 9, wherein the one or more contact actions comprises one slide operation while maintaining continuous contact with the touch-screen display, and the one or more modules are further adapted to determine the one or more positions of the unlock image relative to the background image through one or more turnaround operations in the slide operation.

15. The electronic device of the claim 9, wherein the one or more contact actions comprise an arcuate motion of a point of contact around a rotation center exerted on the unlock image while maintaining continuous contact with the touch-screen display.

16. The electronic device of the claim 9, wherein the one or more contact actions comprise a point of contact exerted outside the unlock image.

17. A computer-implemented method of controlling an electronic device with a touch-screen display, comprising:
providing a processor, a memory; and one or more modules stored in the memory;
detecting one or more contact actions on the touch-screen display when the electronic device is in a user-interface locked state;
rotating an unlock image relative to an background image in accordance with the one or more contact actions, wherein the unlock image and the background image are graphical, and the unlock image is an interactive user-interface object;
determining one or more positions of the unlock image relative to the background image from the one or more contact actions;
changing the electronic device to a user-interface unlocked state upon a condition the one or more positions correspond to one or more predefined positions; and
maintaining the electronic device in the user-interface locked state if the one or more positions do not correspond to the one or more predefined positions.
